# EUROPEAN PATENT APPLICATION

(11) **EP 2 594 833 A1**
(43) Veröffentlichungstag der Anmeldung: **22.05.2013**
(21) Anmeldenummer: 11806296.7
(22) Anmeldetag: 14.07.2011
(51) Int. Cl.: F16K 17/34, F16K 15/14, F16K 27/02

(54) **VORRICHTUNG ZUR ÜBERPRÜFUNG EINER FLUSSEINSTELLUNG**

(30) Priorität: 14.07.2010 CN 201010226804; 14.07.2010 CN 201020258315 U
(71) Anmelder: Xiamen Solex High-Tech Industries Co., Ltd., Xiamen, Fujian 361000 (CN); Zhou, Huasong, Fujian 361000 (CN)
(72) Erfinder: ZHOU, Huasong, Xiamen Fujian 361000 (CN); LIU, Ziguang, Xiamen Fujian 361000 (CN); CHEN, Tianyu, Xiamen Fujian 361000 (CN); HUANG, Xiang, Xiamen Fujian 361000 (CN)
(74) Vertreter: Lermer, Christoph
(86) Internationale Anmeldenummer: PCT/CN2011/077125
(87) Internationale Veröffentlichungsnummer: WO 2012/006954

(57) **Zusammenfassung**

Eine Einrichtung zum Justieren der Durchflussmenge und zur Verhinderung des Rückflusses umfasst einen Wassereinlauf und einen Wasserauslauf und einen Hauptkörper (100). Der Hauptkörper (100) ist mit einer Wasserquelle verbunden und umfasst eine stützende Basis (110). Die stützende Basis (110) ist am Hauptkörper (100) angeordnet und weist eine Montagerille (111) auf; die Durchgangslöcher (112) sind an der Oberfläche der Montagerille (111) angeordnet, und im mittleren Bereich der Montagerille (111) ist ein Montageloch (113) angeordnet. Die Einrichtung umfasst ein Durchflussmengen-Justier-Element (200) und eine Rückfluss-Verhinderungsscheibe (300). Das Durchflussmengen-Justier-Element (200) ist an der Montagerille (111) und oberhalb der Durchgangslöcher (112) angeordnet. Das Durchflussmengen-Justier-Element (200) kann durch Wasserdruck elastisch verformt werden, sodass sich die Fläche des Wasserdurchgangs der Durchgangslöcher (112) verändern kann. Im mittleren Bereich der Rückfluss-Verhinderungsscheibe (300) ist eine Mittelachse (310) hervorstehend angeordnet, die mit dem Montageloch (113) zusammenpassend ist, und die in Abhängigkeit vom Wasserdruck der Durchgangslöcher (112) die Durchgangslöcher (112) abdichten kann oder die Durchgangslöcher (112) mit dem Wasserauslauf verbinden kann. Die Einrichtung zum Justieren der Durchflussmenge und zur Verhinderung des Rückflusses wird in der automatisierten Montage angewendet, wobei die Produktionsleistung erhöht, die Struktur verbessert, und die Empfindlichkeit auch hoch ist.

## Beschreibung

### Technisches Gebiet

1 Die Erfindung betrifft eine sanitäre Einrichtung, insbesondere eine Einrichtung zum Justieren der Durchflussmenge und zur Verhinderung des Rückflusses in dem Rohr.

### Stand der Technik

2 Ein chinesisches Patent mit den Nummer CN200920137849.8 hat den Titel Durchflussmengen-Justierungs- und Rückfluss-Verhinderungs-Ventil, die eine angepasste Hülle, ein Durchflussmengen-Beschränkungs-Element und ein Absperrventil umfasst. Das Absperrventil ist an dem Wasserauslaufende des angepassten Elements abdichtend angeordnet, das einen Ventil-Körper, einen Ventil-Kern, eine Feder und einen Ventil-Deckel umfasst. Dieses Durchflussmengen-Justierungs- und Rückfluss-Verhinderung-Ventil kann die Durchflussmenge justieren und den Rückfluss verhindern. Es weist folgende Mängeln auf: 1. Das Absperrventil ist mit eine Feder zusammenpassend ausgebildet, sodass der Rückfluss verhindert werden kann. Die Struktur ist kompliziert und die Steuerung ist nicht einfach; 2. Wenn das Absperrventil geöffnet wird, muss die Kraft der Feder und die Reibung des Ventil-Körpers mit der innere Seite der angepassten Hülle überwunden werden; Beim Rückstellen des Absperrventils wirkt die Anziehungskraft des Ventil-Kerns und die Reibung des Ventil-Körpers mit der innere Seite des angepassten Hülle muss überwunden werden, wobei die Anforderung des Designs für die Auslenkung der Feder hoch ist, sodass die Empfindlichkeit dieses Produkts niedrig ist.

### Inhalt der Erfindung

3 Diese Erfindung bietet eine Einrichtung zum Justieren einer Durchflussmenge und zur Verhinderung des Rückflusses, wobei die Mängel des Stands der Technik überwunden werden, nämlich die komplizierte Struktur und die niedrige Empfindlichkeit des Durchflussmengen-Justierungs- und Rückfluss-Verhinderungs-Ventil.

4 Die Erfindung verwendet eine folgende technische Lösung:

5 Eine Einrichtung zum Justieren der Durchflussmenge und zur Verhinderung des Rückflusses, die einen Wassereinlauf und einen Wasserauslauf umfasst, umfasst außerdem:

6 einen Hauptkörper, der mit einer Wasserquelle verbunden ist und eine stützende Basis umfasst; wobei die stützende Basis in dem Hauptkörper angeordnet ist und eine Montagerille aufweist; an der Oberfläche der Montagerille sind Durchgangslöcher angeordnet, und im mittleren Bereich der Montagerille ist ein Montageloch angeordnet;

7 und sie umfasst ein Durchflussmengen-Justier-Element und eine Rückfluss-Verhinderungsscheibe;

8 wobei das Durchflussmengen-Justier-Element an der Montagerille und oberhalb der Durchgangslöcher angeordnet ist; das Durchflussmengen-Justier-Element kann durch Wasserdruck elastisch verformt werden, sodass sich die Fläche des Wasserdurchgangs der Durchgangslöcher verändern kann;

9 im mittleren Bereich der Rückfluss-Verhinderungsscheibe ist eine Mittelachse hervorstehend angeordnet, die mit dem Montageloch zusammenpassend ist, und die in Abhängigkeit vom Wasserdruck der Durchgangslöcher die Durchgangslöcher abdichten oder die Durchgangslöcher mit dem Wasserauslauf verbinden kann.

10 Ein verbessertes Ausführungsbeispiel: sie umfasst einen oberen Deckel, der mit der Wasserquelle in Verbindung steht; der Deckel weist an seiner Kante einen hervorstehend Rand auf; an der oberen Seite des Hauptkörpers ist eine umgekehrte Stufen-Struktur angeordnet; der obere Deckel ist durch den hervorstehenden Rand, durch den der Deckel an die umgekehrte Stufen-Struktur angepasst ist, an dem Hauptkörper angeordnet.

11 Ein weiteres verbessertes Ausführungsbeispiel: in dem Hauptkörper ist ein hervorstehendes Dichtungselement angeordnet, das mit der Rückfluss-Verhinderungsscheibe zusammenpassend ist.

12 Ein weiteres verbessertes Ausführungsbeispiel: an der Oberfläche der Verbindungsrille ist eine hervorstehende Achse angeordnet; das Montageloch ist an der hervorstehenden Achse angeordnet; der Hauptkörper umfasst mehrere hervorstehende Teile, die an der inneren Oberfläche des Hauptkörper oder an der äußeren Oberfläche der hervorstehende Achse angeordnet sind.

13 Ein weiteres verbessertes Ausführungsbeispiel: an dem äußeren Rand der oberen Seite des Hauptkörpers ist ein hervorstehendes Führungsteil vorgesehen, dessen Oberfläche im Querschnitt von oben nach unten nach und nach abnimmt und eine schräge Seitenwand aufweist.

14 Ein weiteres verbessertes Ausführungsbeispiel: ein Dichtungselement ist an der Außenseite des Hauptkörpers angeordnet.

15 Die Erfindung verwendet andere folgende technische Lösung:

16 Eine Einrichtung zum Justieren der Durchflussmenge und zur Verhinderung des Rückflusses, die ein Wassereinlaufende und ein Wasserauslaufende umfasst, umfasst außerdem:

17 einen Hauptkörper, der mit einer Wasserquelle verbunden ist und eine stützende Basis umfasst; wobei die stützende Basis in dem Hauptkörper angeordnet ist und eine Montagerille aufweist; an der Oberfläche der Montagerille sind Durchgangslöcher angeordnet, im mittleren Bereich der Montagerille ist eine hervorstehende Achse angeordnet;

18 sie umfasst ein Durchflussmengen-Justier-Element und eine Rückfluss-Verhinderungsscheibe;

19 wobei das Durchflussmengen-Justier-Element an der Montagerille und oberhalb der Durchgangslöcher angeordnet ist; das Durchflussmengen-Justier-Element kann durch Wasserdruck elastisch verformt werden, sodass sich die Fläche des Wasserdurchgangs der Durchgangslöcher verändern kann;

20 die Rückfluss-Verhinderungsscheibe ist oberhalb des Durchflussmengen-Justier-Elements angeordnet; im mittleren Bereich der Rückfluss-Verhinderungsscheibe ist eine Mitteachse hervorstehend angeordnet, die mit dem Hauptkörper fest verbunden ist, und die in Abhängigkeit vom Wasserdruck der Durchgangslöcher die Durchgangslöcher abdichten oder die Durchgangslöcher mit dem Wasserauslauf verbinden kann.

21 Ein verbessertes Ausführungsbeispiel: der Hauptkörper umfasst eine Montage-Basis, die mit dem Wassereinlauf verbunden; die Montage-Basis umfasst ein Montage-Loch und mehre Zusatzelemente, das Montage-Loch ist mit der Mitteachse zusammenpassend und die Zusatzelemente sind auf einer Horizontalebene angeordnet, und das Montage-Loch ist in dem mittleren Bereich der Zusatzelemente angeordnet.

22 Ein weiteres verbessertes Ausführungsbeispiel: der Hauptkörper umfasst mehrere hervorstehende Teile, die an der inneren Oberfläche des Hauptkörpers oder an der äußeren Oberfläche der hervorstehenden Achse angeordnet sind.

23 Im Vergleich dieser technischen Lösung mit dem Stand der Technik hat diese Erfindung folgende Vorteile:

24 1. Das Durchflussmengen-Justier-Element und die Rückfluss-Verhinderungsscheibe sind in eine Achse innerhalb desselben Hauptkörpers angeordnet, eine ist neben dem Wassereinlauf und die andere ist neben dem Wasserauslauf angeordnet, die beiden verwenden dieselbe stützende Basis, wobei die Einzelteile reduziert und Kosten eingespart werden und die Struktur besser ist, das Volumen klein ist, die Anforderungen bei der Montage des Rohrs gering sind; es ist an einer Achse angeordnet, sodass die automatisierte Montage möglich ist, sodass die Produktionsleistung erhöht wird und der Wettbewerbsvorteil am Markt erhöht wird. 2. Bei der Justierung, wenn die Rückfluss- Verhinderungsscheibe elastisch verformt ist, können die Durchgangslöcher abgedichtet oder verbunden werden, damit das Wasser auslaufen kann; es wird kein zusätzliches Element, z.B. eine Feder... usw., benötigt, wobei die Einzelteile reduziert werden und die Empfindlichkeit des Produkts erhöht wird. 3. Der Deckel weist an seiner Kante einen hervorstehenden Rand auf, und an der oberen Seite des Hauptkörpers ist eine umgekehrte Stufen-Struktur angeordnet, sodass die beiden Teile des Produkts eng aneinander angepasst werden können. 4. Am Hauptkörper ist ein hervorstehendes Führungsteil vorgesehen, sodass er mit der Rückfluss-Verhinderungsscheibe eng aneinander angepasst werden kann, wobei der Dichtungseffekt der Durchgangslöcher verbessert wird. 5. Mehrere hervorstehende Teile sind an der inneren Oberfläche des Hauptkörpers oder an der äußeren Oberfläche der hervorstehenden Achse angeordnet, die mit dem Durchflussmengen-Justier-Element zusammenpassend sind. Damit wird verhindert, dass das Durchflussmengen-Justier-Element bei der elastischen Verformung durch den Wasserdruck die Durchgangslöcher komplett verschließt. 6. An dem äußeren Rand der oberen Seite des Hauptkörpers ist ein hervorstehendes Führungsteil vorgesehen. Durch die schräge Seitenwand wird die Montage der Einrichtung zum Justieren der Durchflussmenge und zur Verhinderung des Rückflusses in dem Rohr vereinfacht, wobei diese nicht einfach aus dem Rohr herausgenommen werden kann, sodass die Zuverlässigkeit der Montage erhöht wird. 7. Das Dichtungselement ist außerhalb des Hauptkörpers angeordnet, sodass die Dichtungsfähigkeit der Einrichtung zum Justieren der Durchflussmenge und zur Verhinderung des Rückflusses erhöht wird. 8. Das Durchflussmengen-Justier-Element und die Rückfluss-Verhinderungsscheibe sind separat neben den Wassereinlauf und den Wasserauslauf angeordnet, sodass der Durchflussmenge effektiv justiert und der Rückfluss effektiv verhindert werden kann. 9. Wenn die Rückfluss-Verhinderungsscheibe neben dem Wassereinlauf ist, bietet der Hauptkörper eine stützende Basis, sodass die Rückfluss-Verhinderungsscheibe durch die stützende Basis oberhalb des Hauptkörpers angeordnet werden kann.

### Beschreibung der Figuren

25 Zur weiteren Veranschaulichung der Erfindung ist ein Ausführungsbeispiel mit den Figuren angeführt, wobei die Figuren folgendes zeigen.

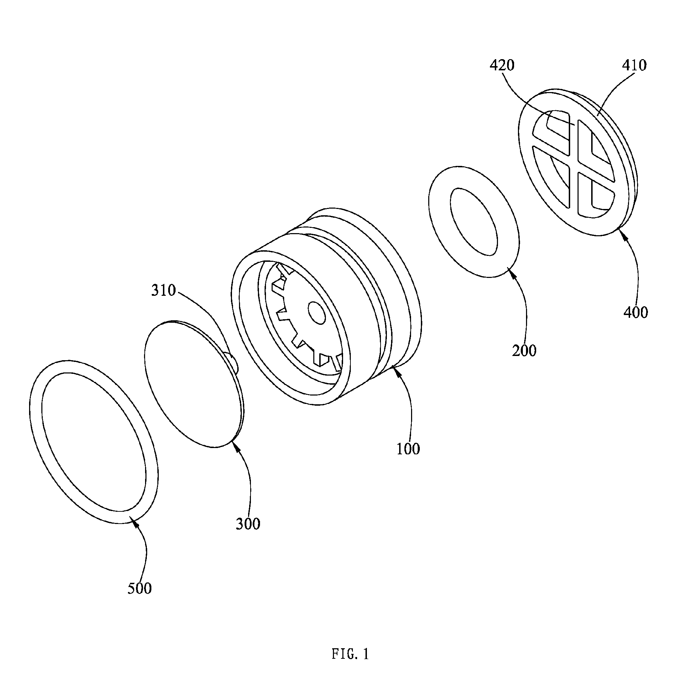

26 Figur 1 zeigt eine perspektivische Explosionsdarstellung eines Ausführungsbeispiels 1 dieser Erfindung.

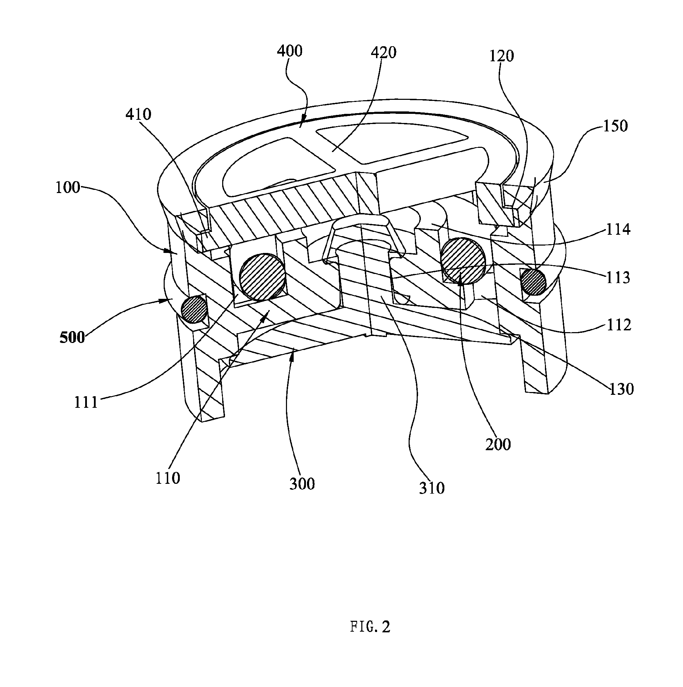

27 Figur 2 zeigt eine perspektivische Querschnitts-Darstellung eines Ausführungsbeispiels 1 dieser Erfindung.

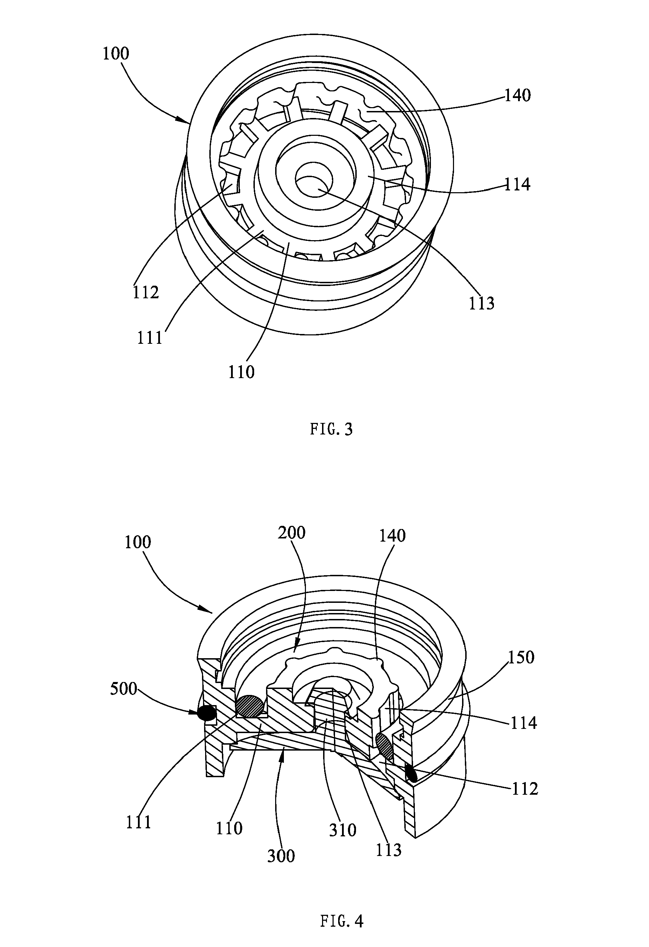

28 Figur 3 zeigt eine perspektivische Darstellung eine Struktur des Hauptkörpers eines Ausführungsbeispiels 1 dieser Erfindung.

29 Figur 4 zeigt eine perspektivische Querschnitts-Darstellung einer anderen Struktur des Hauptkörpers eines Ausführungsbeispiels 1 dieser Erfindung.

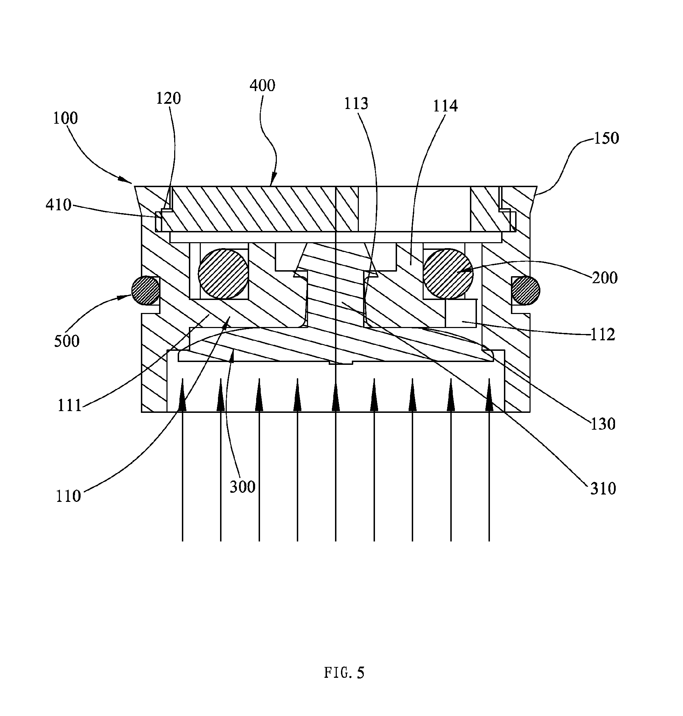

30 Figur 5 zeigt eine Querschnitts-Darstellung eines Ausführungsbeispiels 1 dieser Erfindung, wobei die Durchgangslöcher von der Rückfluss-Verhinderungsscheibe abgedichtet werden.

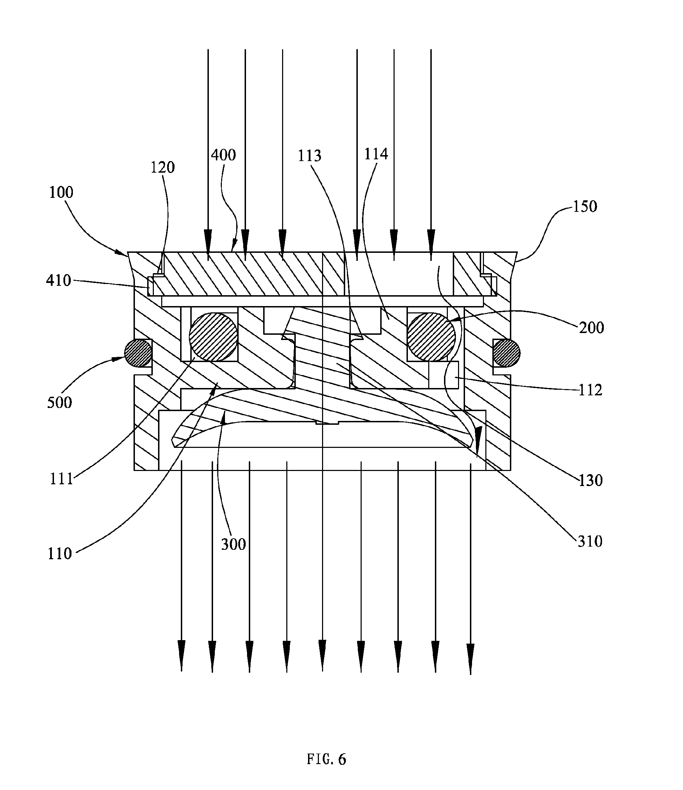

31 Figur 6 zeigt eine Querschnitts-Darstellung eines Ausführungsbeispiels 1 dieser Erfindung, wobei die Durchgangslöcher mittels der Rückfluss-Verhinderungsscheibe mit dem Wasserauslauf verbunden werden.

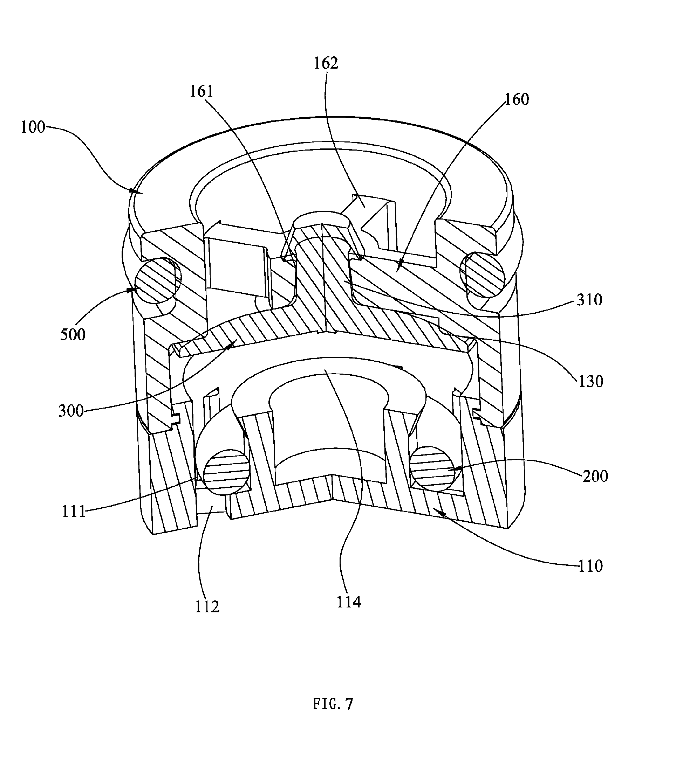

32 Figur 7 zeigt eine perspektivische Querschnitts-Darstellung eines Ausführungsbeispiels 2 dieser Erfindung.

33 Beschreibung der Bezugszeichen-Kennzeichnung:

34 Ein Hauptkörper 100; eine stützende Basis 110; eine Montagerille 111; Durchgangslöcher 112; ein Montageloch 113; eine hervorstehende Achse 114; eine umgekehrte Stufen-Struktur 120; ein hervorstehendes Dichtungselement 130; hervorstehende Teile 140; ein hervorstehendes Führungsteil 150; eine Montage-Basis 160; ein Montage-Loch 161; Zusatzelemente 162; ein Durchflussmengen-Justier-Element 200; eine Rückfluss-Verhinderungsscheibe 300; eine Mitteachse 310; ein oberer Deckel 400; ein hervorstehender Rand 410; eine kreuzförmige Struktur 420; ein Dichtungselement 500.

### Detaillierte Beschreibung bevorzugter Ausführungsbeispiele

35 Die Figur 1 bis Figur 6 zeigt eine Einrichtung zum Justieren der Durchflussmenge und zur Verhinderung des Rückflusses gemäß einem ersten Ausführungsbeispiel dieser Erfindung.

36 Im Ausführungsbeispiel 1, siehe Figur 1,umfasst diese Einrichtung zum Justieren der Durchflussmenge und zur Verhinderung des Rückflusses einen Hauptkörper 100, ein Durchflussmengen-Justier-Element 200, eine Rückfluss-Verhinderungsscheibe 300, einen oberen Deckel 400 und ein Dichtungselement 500. Das Durchflussmengen-Justier-Element 200 und die Rückfluss-Verhinderungsscheibe 300 sind an Seiten des Hauptkörpers 100 angeordnet. Die Rückfluss-Verhinderungsscheibe 300 ist mittels einer hervorstehende Mitteachse 310 angeordnet, die mit dem Hauptkörper 100 fest verbunden ist. Der obere Deckel 400 ist oberhalb des Hauptkörpers 100 angeordnet; das Dichtungselement 500 ist an der Außenseite des Hauptkörpers 100 angeordnet.

37 Mit Bezug auf die Figur 2 weist der Hauptkörper 100 einen Wassereinlauf auf, der mit einer Wasserquelle in Verbindung steht; und der Hauptkörper 100 weist einen Wasserauslauf auf. Die stützende Basis 110 ist in dem Hauptkörper 100 angeordnet. Zwischen der stützende Basis 110 und dem Hauptkörper 100 ist die Montagerille 111 angeordnet. An der Oberfläche der Montagerille 111 ist eine hervorstehende Achse 114 angeordnet. Das Montageloch 113 ist an der hervorstehenden Achse 114 angeordnet. An der Oberfläche der Montagerille 111 sind mehrere Durchgangslöcher 112 angeordnet. An dem äußeren Rand der oberen Seite des Hauptkörpers 100 ist ein hervorstehendes Führungsteil 150 vorgesehen, dessen Oberfläche im Querschnitt von oben nach unten nach und nach abnimmt, sodass der äußere Rand des hervorstehenden Führungsteils 150 eine schräge Seitenwand ist. Die Einrichtung zum Justieren der Durchflussmenge und zur Verhinderung des Rückflusses kann einfach in einem Rohr angeordnet werden, wobei sie nicht einfach herausgenommen werden kann, sodass die Zuverlässigkeit erhöht wird.

38 Das Durchflussmengen-Justier-Element 200 ist ein ringförmiges elastisches Element, das in der Montagerille 111 angeordnet ist, und an der hervorstehenden Achse 114 angeordnet ist und oberhalb der Durchgangslöcher 112 angeordnet ist. Die Rückfluss-Verhinderungsscheibe 300 besteht aus relativ weichem Material, das elastisch verformt werden kann. An der Rückfluss-Verhinderungsscheibe 300 ist eine Mittelachse 310 angeordnet, die mit dem Montageloch 113 zusammenpassend ist, sodass die Rückfluss-Verhinderungsscheibe 300 unterhalb der stützenden Basis 110 fest mit dem Hauptkörper 100 verbunden ist. Am Kontakt des Hauptkörpers 100 mit der Rückfluss-Verhinderungsscheibe 300 ist ein hervorstehendes Dichtungselement 130 angeordnet, sodass der Dichtungseffekt der Rückfluss-Verhinderungsscheibe 300 mit den Durchgangslöchern 112 verbessert ist. Der oberen Deckel 400 weist eine kreuzförmige Struktur 420 auf. Das Wasser kann durch die kreuzförmige Struktur 420 in den Hauptkörper 100 einlaufen. Der Rand des oberen Deckels 400 weist einen ringförmigen hervorstehenden Vorsprung 410 auf. An der oberen Seite des Hauptkörpers 100 ist eine umgekehrte Stufen-Struktur 120 angeordnet; der obere Deckel 400 ist durch den ringförmigen hervorstehenden Vorsprung 410, durch den der Deckel an die umgekehrte Stufen-Struktur 120 angepasst ist, oben am Hauptkörper 100 angeordnet, sodass die Struktur gefestigt ist. Das Dichtungselement 500 ist außerhalb des Hauptkörpers 100 angeordnet, sodass die Dichtungsfähigkeit der Einrichtung zum Justieren der Durchflussmenge und zur Verhinderung des Rückflusses erhöht ist.

39 Mehrere hervorstehende Teile 140 sind an dem Hauptkörper 100 an einer Achse angeordnet. Figur 3 und Figur 4 zeigen die hervorstehende Teile 140 an verschiedenen Stellen. In Figur 3 sind die hervorstehenden Teile 140 ringförmig an der inneren Oberfläche des Hauptkörpers 100 zur Montagerille 111 hin angeordnet. Die Teile 140 sind nicht beschränkt auf die Ausführungsform. In der Figur 4 sind die hervorstehenden Teile 140 ringförmig an der äußeren Oberfläche der hervorstehenden Achse 114 angeordnet. Die hervorstehende Teile 140 sind mit dem Durchflussmengen-Justier-Element 200 zusammenpassend. Wenn das Durchflussmengen-Justier-Element 200 durch Wasserdruck angedrückt wird werden mit Hilfe der hervorstehenden Teile 140 die Durchgangslöcher 112 nicht komplett durch das Durchflussmengen-Justier-Element 200 zugestopft. Die Fläche des Wasserdurchgangs der Durchgangslöcher 112 kann vermindert werden, sodass die Durchflussmenge justiert werden kann.

40 Figur 5 und Figur 6 zeigen die Funktionsweise der Einrichtung zum Justieren der Durchflussmenge und zur Verhinderung des Rückflusses. Siehe Figur 5: der Druck des Wassereinlaufs ist gleich oder kleiner als der Wasserdruck des Wasserauslaufs. Die Rückfluss-Verhinderungsscheibe 300 wird durch den Wasserdruck des Wasserauslaufs und die eigene Elastizität an den hervorstehendes Dichtungselement 130 anliegen, die Durchgangslöcher 112 sind nicht mit dem Wasserauslauf verbunden. Aus dieser Einrichtung zum Justieren der Durchflussmenge und zur Verhinderung des Rückflusses läuft kein Wasser aus. Siehe Figur 6: der Druck des Wassereinlaufs wird gesteigert, wobei der Druck größer als den Druck des Wasserauslauf ist. Die Rückfluss-Verhinderungsscheibe 300 wird durch den Wasserdruck des Wassereinlaufs nach unten gebogen, und sie wird nicht an dem hervorstehenden Dichtungselement 130 anliegen und abdichten. Die Durchgangslöcher 112 sind mit dem Wasserauslauf verbunden. Aus diese Einrichtung zum Justieren der Durchflussmenge und zur Verhinderung des Rückflusses läuft das Wasser aus. Die Menge an Wasser des Wassereinlaufs wird vergrößert, das Durchflussmengen-Justier-Element 200 wird elastisch verformt und angedrückt, wobei die Fläche des Wasserdurchgangs der Durchgangslöcher 112 verkleinert wird, sodass die Wassermenge des Wasserauslaufs durch die Durchgangslöcher 112 verkleinert wird, wobei die Durchflussmenge justiert werden kann.

41 Gemäß Figur 7 zeigt die Einrichtung zum Justieren der Durchflussmenge und zur Verhinderung des Rückflusses des Ausführungsbeispiels 2 dieser Erfindung, dass die Struktur des Ausführungsbeispiels 2 im Wesentlichen gleich ist wie das Ausführungsbeispiel 1. Der Unterschied ist, dass das Durchflussmengen-Justier-Element 200 beim Wasserauslauf angeordnet ist, die Rückfluss-Verhinderungsscheibe 300 ist beim Wassereinlauf angeordnet, der oberhalb des Durchflussmengen-Justier-Elements 200 angeordnet ist. Der Hauptkörper 100 umfasst die stützende Basis 110, die stützende Basis 110 weist eine Montagerille 111 auf, an der das Durchflussmengen-Justier-Element 200 angeordnet ist. An der Oberfläche der Montagerille 111 ist eine hervorstehende Achse 114 angeordnet; und die Durchgangslöcher 112 sind an der Oberfläche der Montagerille 111 angeordnet. Das Durchflussmengen-Justier-Element 200 ist an der hervorstehenden Achse 114 und oberhalb der Durchgangslöcher 112 angeordnet. Der Hauptkörper 100 umfasst eine Montage-Basis 160. Die Montage-Basis 160 weist mehre Zusatzelemente 162 auf Die Enden der Zusatzelemente 162 sind mit der Innenseite des Hauptkörpers 100 fest verbunden, die anderen Enden laufen an einem Punkt zusammen, d.h.: im mittleren Bereich der Montage-Basis 160 ist das Montage-Loch 161 an diesem mittleren Punkt angeordnet. Die Mitteachse 310 der Rückfluss-Verhinderungsscheibe 300 ist mit dem Montage-Loch 161 fest verbunden, und die Rückfluss-Verhinderungsscheibe 300 ist unterhalb der Montage-Basis 160 angeordnet. Der obere Umfang der hervorstehenden Achse 114 ist größer als der untere Umfang der hervorstehenden Achse 114, oder die Achse 114 weist ein Positionierungselement auf, sodass die Bewegung des Durchflussmengen-Justier-Elements 200 in der Montagerille 111 beschränkt ist.

42 Im zweiten Ausführungsbeispiel ist die Funktionsweise der Einrichtung zum Justieren der Durchflussmenge und zur Verhinderung des Rückflusses gleich wie im ersten Ausführungsbeispiel. Es wird der Wasserdruck benutzt, d.h.: wenn der Druck des Wassereinlaufs gleich oder kleiner als der Wasserdruck des Wasserauslaufs ist, liegt die Rückfluss-Verhinderungsscheibe 300 durch den Wasserdruck des Wasserauslaufs und die eigene Elastizität an dem hervorstehenden Dichtungselement 130 an, wobei die Durchgangslöcher 112 nicht mit dem Wasserauslauf verbunden sind. Bei der Erhörung des Drucks des Wassereinlaufs wird, wenn er größer als den Druck des Wasserauslaufs ist, die Rückfluss-Verhinderungsscheibe 300 durch den Wasserdruck des Wassereinlaufs nach unten gebogen, wobei die Rückfluss-Verhinderungsscheibe 300 nicht am hervorstehenden Dichtungselement 130 anliegt und abdichtet. Das Wasser läuft über den Wassereinlauf in die Montagerille 111, und das Wasser läuft über die Durchgangslöcher 112 in den Wasserauslauf, sodass das Wasser durch diese Einrichtung zum Justieren der Durchflussmenge und zur Verhinderung des Rückflusses auslaufen kann. Wenn der Wasserdruck einen bestimmten Wert erreicht, wird das Durchflussmengen-Justier-Element 200 lastisch verformt und zusammengedrückt, die Fläche des Wasserdurchgangs der Durchgangslöcher 112 verkleinert sich, und die Wassermenge verkleinert sich, sodass die Durchflussmenge justiert werden kann.

43 Die obige Erfindung betrifft nur ein Ausführungsbeispiel. Allerdings ist das Design-Konzept der Erfindung nicht beschränkt auf die Ausführungsform. Jegliche Verwendungen der Idee der Erfindung betreffend nicht-inhaltliche Änderungen sollten zu einer Verletzung des beanspruchten Gegenstands führen.

### Gewerbliche Anwendbarkeit

Die Erfindung betrifft eine Einrichtung zum Justieren der Durchflussmenge und zur Verhinderung des Rückflusses, die in der automatisierten Montage anwendbar ist, wobei die Produktionsleistung erhöht wird, die Struktur verbessert ist, die Empfindlichkeit zum Justieren der Durchflussmenge hoch und der Effekt zur Verhinderung des Rückflusses gut ist.

## Patentansprüche

1. Eine Einrichtung zum Justieren der Durchflussmenge und zur Verhinderung des Rückflusses, die umfasst:
einen Wassereinlauf und einen Wasserauslauf;
**dadurch gekennzeichnet, dass** sie außerdem umfasst:
einen Hauptkörper, der mit einer Wasserquelle verbunden ist und eine stützende Basis umfasst; wobei die stützende Basis in dem Hauptkörper angeordnet ist und eine Montagerille aufweist; an der Oberfläche der Montagerille Durchgangslöcher angeordnet sind, und im mittleren Bereich der Montagerille ein Montageloch angeordnet ist;
und ein Durchflussmengen-Justier-Element und eine Rückfluss-Verhinderungsscheibe;
wobei das Durchflussmengen-Justier-Element an der Montagerille und oberhalb der Durchgangslöcher angeordnet ist; das Durchflussmengen-Justier-Element durch Wasserdruck elastisch verformt werden kann, sodass sich die Fläche des Wasserdurchgangs der Durchgangslöcher verändern kann;
im mittleren Bereich der Rückfluss-Verhinderungsscheibe eine Mittelachse hervorstehend angeordnet ist, die mit dem Montageloch zusammenpassend ist, und die in Abhängigkeit vom Wasserdruck der Durchgangslöcher die Durchgangslöcher abdichten kann oder die Durchgangslöcher mit dem Wasserauslauf verbinden kann.

2. Eine Einrichtung zum Justieren der Durchflussmenge und zur Verhinderung des Rückflusses nach Anspruch 1,
**dadurch gekennzeichnet, dass** sie umfasst:
einen oberen Deckel, der mit der Wasserquelle in Verbindung steht; der Deckel am Rand des Deckels einen hervorstehend Rand aufweist; an der oberen Seite des Hauptkörpers eine umgekehrte Stufen-Struktur angeordnet ist;
der obere Deckel ist durch den hervorstehenden Rand, durch den der Deckel an die umgekehrte Stufen-Struktur angepasst ist, an dem Hauptkörper angeordnet.

3. Eine Einrichtung zum Justieren der Durchflussmenge und zur Verhinderung des Rückflusses nach Anspruch 1,
**dadurch gekennzeichnet, dass**
in dem Hauptkörper ein hervorstehendes Dichtungselement angeordnet ist, das mit der Rückfluss-Verhinderungsscheibe zusammenpassend ist.

4. Eine Einrichtung zum Justieren der Durchflussmenge und zur Verhinderung des Rückflusses nach Anspruch 1,
**dadurch gekennzeichnet, dass**
an der Oberfläche der Montagerille eine hervorstehende Achse angeordnet ist; das Montageloch an der hervorstehenden Achse angeordnet ist; der Hauptkörper mehrere hervorstehende Teile umfasst, die an der inneren Oberfläche des Hauptkörper 100 oder an der äußeren Oberfläche der hervorstehende Achse angeordnet sind.

5. Eine Einrichtung zum Justieren der Durchflussmenge und zur Verhinderung des Rückflusses nach Anspruch 1,
**dadurch gekennzeichnet, dass**
an dem äußeren Rand der oberen Seite des Hauptkörpers ein hervorstehendes Führungsteil vorgesehen ist, dessen Oberfläche im Querschnitt von oben nach unten nach und nach abnimmt und eine schräge Seitenwand aufweist.

6. Eine Einrichtung zum Justieren der Durchflussmenge und zur Verhinderung des Rückflusses nach Anspruch 1 bis 5,
**dadurch gekennzeichnet, dass**
ein Dichtungselement an der Außenseite des Hauptkörpers angeordnet ist.

7. Eine Einrichtung zum Justieren der Durchflussmenge und zur Verhinderung des Rückflusses, die umfasst:
ein Wassereinlaufende und ein Wasserauslaufende;
**dadurch gekennzeichnet, dass** sie umfasst:
einen Hauptkörper, der mit einer Wasserquelle verbunden ist und eine stützende Basis umfasst; wobei die stützende Basis in dem Hauptkörper angeordnet ist und eine Montagerille aufweist; an der Oberfläche der Montagerille Durchgangslöcher angeordnet sind, im mittleren Bereich der Montagerille eine hervorstehende Achse angeordnet ist;
und ein Durchflussmengen-Justier-Element und eine Rückfluss-Verhinderungsscheibe;
wobei das Durchflussmengen-Justier-Element an der Montagerille und oberhalb der Durchgangslöcher angeordnet ist; das Durchflussmengen-Justier-Element durch Wasserdruck elastisch verformt werden kann, sodass sich die Fläche des Wasserdurchgangs der Durchgangslöcher verändern kann;
die Rückfluss-Verhinderungsscheibe oberhalb des Durchflussmengen-Justier-Elements angeordnet ist; im mittleren Bereich der Rückfluss-Verhinderungsscheibe eine Mitteachse hervorstehend angeordnet ist, die mit dem Hauptkörper fest verbunden ist, und die in Abhängigkeit vom Wasserdruck der Durchgangslöcher die Durchgangslöcher abdichten kann oder die Durchgangslöcher mit dem Wasserauslauf verbinden kann.

8. Eine Einrichtung zum Justieren der Durchflussmenge und zur Verhinderung des Rückflusses nach Anspruch 7,
**dadurch gekennzeichnet, dass**
der Hauptkörper eine Montage-Basis umfasst, die mit dem Wassereinlauf verbunden ist; die Montage-Basis ein Montage-Loch und mehre Zusatzelemente umfasst, das Montage-Loch mit der Mitteachse zusammenpassend ist und die Zusatzelemente auf einer Horizontalebene angeordnet sind, und das Montage-Loch in dem mittleren Bereich der Zusatzelemente angeordnet ist.

9. Eine Einrichtung zum Justieren der Durchflussmenge und zur Verhinderung des Rückflusses nach Anspruch 7,
**dadurch gekennzeichnet, dass**
der Hauptkörper mehrere hervorstehende Teile umfasst, die an der inneren Oberfläche des Hauptkörpers oder an der äußeren Oberfläche der hervorstehenden Achse angeordnet sind.

10. Eine Einrichtung zum Justieren der Durchflussmenge und zur Verhinderung des Rückflusses nach Anspruch 7,
**dadurch gekennzeichnet, dass**
der obere Umfang der hervorstehende Achse größer als der untere Umfang der hervorstehenden Achse ist, oder die Achse ein Positionierungselement aufweist.
